# EUROPEAN PATENT SPECIFICATION

(11) **EP 3 871 570 B1**
(45) Date of publication and mention of the grant of the patent: **04.03.2026**
(21) Application number: 19876297.3
(22) Date of filing: 02.10.2019
(51) Int. Cl.: A47J 31/44, A47J 31/46

(54) **MACHINE AND PROCEDURE FOR PREPARING HOT DRINKS**
MASCHINE UND VERFAHREN ZUR HERSTELLUNG VON HEISSGETRÄNKEN
MACHINE ET PROCÉDÉ POUR LA PRÉPARATION DE BOISSONS CHAUDES

(30) Priority: 22.10.2018 ES 201831024
(43) Date of publication of application: 01.09.2021
(73) Proprietor: Crem International Spain S.L., 46701 Gandia (ES)
(72) Inventor: CANET PEIRO, Juan Antonio, 46702 Gandia (ES); BORDES COSTA, Jose Maria, 03780 Pego (ES)
(74) Representative: Carlos Hernando, Borja
(86) International application number: PCT/ES2019/070663
(87) International publication number: WO 2020/084175

(56) References cited:
- WO-A1-03/037151
- WO-A1-2011/144720
- WO-A1-2011/144720
- WO-A1-2017/031212
- WO-A1-2017/067896
- WO-A1-2017/067896
- WO-A1-2017/076828
- WO-A1-2017/076828
- WO-A2-2006/090183
- CN-A- 104 379 033
- US-A1- 2010 024 658
- US-A1- 2016 338 527
- US-A1- 2017 273 502
- US-A1- 2017 273 502

## Description

### Field of technology

The present invention lies within the field devoted to the manufacture of machines for preparing hot drinks.

### Prior art

Many inventions and procedures exist in the prior art which adapt or improve the producing of hot drinks, many of them being known, such as those devoted to preparing various beverages in a single machine, as is the case in particular with automatic dispensing machines, which therefore need to adjust the pressure and temperature, for example, depending on whether preparing an instant freeze-dried beverage or tea; the most recent innovations incorporate a logic implentation and a storage medium under a control unit; the incorporation of a microprocesssor is already seen in machines such as those of the applicant Illy caffé S.P.A. with priority date of 4 May 1982, published in Spain as No. 8403175, which already envisions the possibility of a control of the extraction parameters by taking data from a plurality of sensors, as well as the storage of these data. Another example of this type can be found in the patent WO 2011/143483 of the applicant Crane Merchandising Systems, Inc, which comprises a coffee maker machine with a movable press and a controller that adjusts a grinder to different grain sizes and has a user interface for selecting the type of beverage; it does not dwell on how to produce an adequate adjustment of the pressure, or how the elements of the machine contribute to producing a technical effect that improves the known art of making hot drinks. Other documents, such as the European patent with publication number 2502478 of the applicant Rheavendors Services S.P.A., describe a procedure for the preparation of beverages involving the adjustment and management of the extraction parameters by means of a control logic implemented in a control unit for the making of the beverages, the flow rate being adjusted thanks to the contribution of two or more pumps which are connected in series, and also the volume of the preparation chamber is adjusted by means of two pistons that are controlled independently. This technical solution proves to be complex in its implementation, for cost reasons, and it differs clearly from the one proposed here.

Other solutions for achieving an adequate selection of the preparation parameters, specifically the regulation of the flow rate, are accomplished by the use of a regulable, proportional solenoid valve, controlled from a control unit, the contribution of this element being found in the patent EP 2314183 of the applicant Gruppo Cimbali S.P.A. The patent also describes the distribution of other components such as filters, or the location of the transducers.

The patent document WO 2017/076828 A1 (NESTEC SA [CH]) describes a machine for the preparation of hot beverages that features means to remotely know the status of the inputs, water, coffee or cups, likewise it has a GPS and/or satellite communication to know the exact location of the machine. Patent WO 2017/067896 A1 (NESTEC SA [CH]) is characterized by providing a "compact, cost-effective, hygienic and cosmetically appealing" user interface and thus differs from the claimed one. For the rest, no other procedures or machines like the one described in the proposed invention are known.

### Object of the invention

To equip machines for preparing hot drinks with a procedure and machine enabling an improvement over the presently known prior art relative to the control of the infusion and extraction processes of the drink, allowing fine adjustments in the parameters of pressure, temperature, and time; at the same time allowing a control unit to process these data, to store them and to retrieve them at will, improving the capabilities of these machines and the user experience; the resulting machine is able to produce these results by introducing technical changes that are feasible for practical implementation on account of their practicality and low cost, providing technical improvements that affect the preparation of beverages and the robustness and reliability of the machine.

### Description of the invention

The present invention offers technical solutions that improve the preparing of hot drinks as compared to the currently existing machines, such that the proposed machine and its procedure involve a management of the parameters that regulate the infusion and extraction of the raw materials of plant origin to obtain the corresponding hot drinks. The machine for the making of hot drinks comprises a tank for water, which is open and therefore at atmospheric pressure, thereby facilitating the working of the pump, since its conditions are constant and known; this tank receives the water from the mains and has means of ensuring adequate storage levels of the water by means of a capacitive level sensor and software alarms situated in at least one control unit to ensure that the tank never drops below a minimum pre-established level which might allow an entry of air into the pump; if necessary, this may be filled manually. There is a flow meter situated between the tank and the boiler, and a single DC rotary pump, the speed of which is regulated by means of a pulse width modulation circuit; downstream from the pump, there is a check valve and a boiler with heating element that routes the water to the dispensing assembly, where the extraction of the beverage takes place. This assembly can be operated by means of a mechanical or an electromechanical actuator, the opening of which takes the prepared beverage to its container. The control unit comprises, on the one hand, means for making the adjustments required by the user by the use of an incremental rotary encoder with push-button function and a graphic interface to represent both the options and the results, provided with a selection keypad; on the other hand, the control unit collects and interprets, by means of a control logic, the signals provided by the systems for control of the level of the tank, the flow meter, the pressure transducer, and the temperature transducer of the boiler; it has at least one memory and a clock for setting a time base of the events, as well as means of communication, preferably being wireless, such as WiFi or Bluetooth.

The procedure for the preparing of hot drinks carried out by the proposed machine comprises means for entering the user's preferences by using a rotary encoder with push-button function, the actuating of which in both the clockwise and counterclockwise direction allows the selecting of a mode that shall be called the recipe, and using the push-button to access a second personalized adjustment mode, the options so selected being displayed on a graphics interface that supplements and broadens the selection of the described encoder using a conventional keypad; when the recipe mode is selected, we can choose among the different standardized options,
thanks to having a control unit with at least one memory for these data and means for the interpretation of the characteristic parameters collected by the transducers of flow rate and pressure, situated upstream from the boiler and heating unit, and therefore working at a temperature close to the input temperature, which extends the lifetime of these components; as well as the corresponding temperature transducer located in the boiler, which will be used to produce the selected recipe. The push-button is used to select the beverage and prepare it, and the at least one control unit with a PID logic and a pulse width modulation circuit is used to command a single DC rotary vane pump, which provides the water coming from a tank containing the water at atmospheric pressure with the pressure and flow rate adjustments saved in memory to a boiler with heating element, and from here to the dispensing assembly, and from this to the glass or cup. In an additional aspect, the procedure allows the entering of recipes through at least one communication port.

It is to be noted that, when the water of the tank is at atmospheric pressure, the conditions of the pump will always be identical and known, unlike when operating directly from the water main, which might make its operation more complicated, since the pressure will vary according to the location of the machine and may even be determined by the condition of the water at a particular moment.

In a second mode contemplated in the procedure, the selection of the user by way of the encoder and its validation by means of the actuating of its push-button enables the selecting of a personalized adjustment mode, which allows an adjustment to be carried out, while the beverage is being prepared, of the pressure and/or flow rate parameters as provided by the pump and the time of infusion and extraction; after the beverage has been prepared, it is possible to save these parameters for the making the beverages, these parameters are saved in memory, generating a visual and/or acoustic alarm when the dispensing flow rate is outside a pre-established range (between a minimum and a maximum), ensuring the proper dispensing of the beverage and indicating potential problems in the hydraulic system (possible blockage) or differences in the preparation of the raw materials of the beverage making it impossible to repeat the dispensing with the previously memorized parameters, for example, in the case when the ingredient for the preparation of a beverage may have a different degree of moisture content o compactness.

### BRIEF DESCRIPTION OF THE DRAWINGS:

For a better understanding of what is specified in the present document, it is accompanied by figures representing, merely as an example, diagrams which will aid in interpreting how the proposed machine and the procedure for preparing hot drinks in it are constituted.

### Description of the figures:

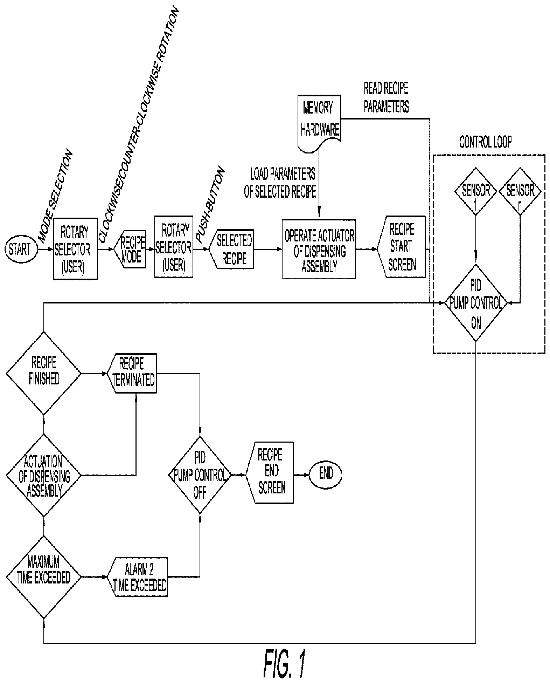

Figure 1 illustrates schematically the procedure for preparing hot drinks when the user has opted for the recipe mode.

With the machine turned on and at rest, already warm after a few minutes from its power on, by means of the rotary selector we can select the recipe mode or the barista mode, once the recipe mode is selected, we proceed to select the desired recipe from the list of possible ones, after validating the selection, the machine loads the parameters from the memory and starts the recipe.

When playing back the selected recipe, the control loop compares the pressure and flow parameters accumulated in memory (saved when the recipe was created in the first instance) with those measured by the pressure transducer and the flow meter, deciding whether to modify the % of PWM pump power supply or not (the pulse modulation or PWM is to vary per unit of time the percentage of time ON to the nominal voltage, ie and as an example 80% means that 80% of 1s the pump receives 24V DC and 20% 0V DC, which produces what would be equivalent to 80% of 24V DC or 19.2 V DC), if this increases, the average supply voltage of the pump increases and vice versa, producing this a variation of pressure and flow rate in the extraction, which allows to adjust the recipe reproduction to what was originally saved.

There are 3 stop conditions: that the maximum time is reached, which indicates that the flow rate is much slower than what was originally saved; this can be if there has been a large variation in the grinding of the coffee, e.g. it has been ground much finer, or in the pressing force; or in the pressing force or "tamping force", which causes the resistance to the passage to be substantially much greater and the accumulated flow rate cannot be reached in a defined maximum time, this is also done for safety, that the user stops the recipe manually by operating the cam of the dispensing group and-or that the recipe has ended correctly, in all cases disconnecting the pump when stopping the recipe.

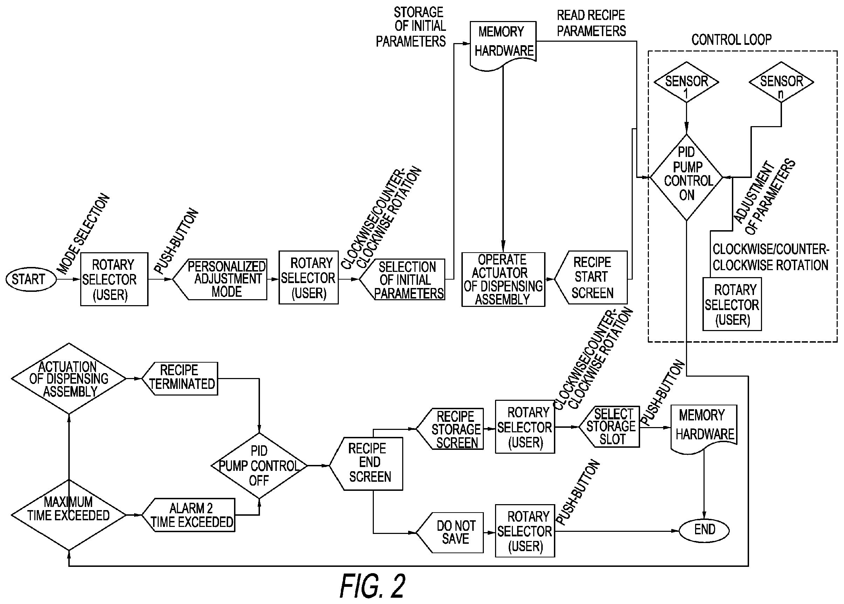

The barista mode works in the same way, but what happens is that the control loop varies the PWM % of the pump to adjust to the pressure parameter set by the barista through the rotary selector during beverage preparation, saving in memory the accumulated pressure and flow rate data every second that will later allow its reproduction. The stop conditions in the barista mode are 2, likewise, there is a maximum recipe time, if this is reached, the recipe is automatically terminated and the user can stop it manually, after finishing the recipe it is possible to save it in a position of the recipe list or discard it, only if it is saved it can be reproduced later in the recipe mode. Figure 2 illustrates the procedure when the personalized adjustment mode is selected.

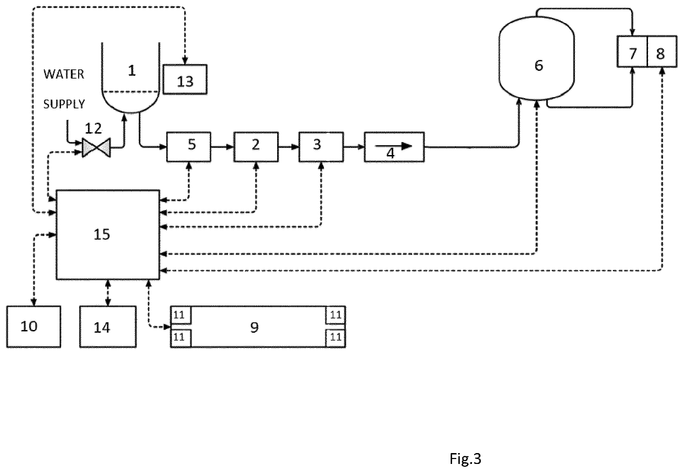

Figure 3 shows a block diagram of the machine for preparing hot drinks that is the subject of the present invention, showing: the element (12) represents the tap water supply valve; (1) represents the open water tank; (2) is the DC rotary vane pump; (3) is the pressure transducer; (4) is the check valve; (5) is the flow rate transducer; (6) is the boiler with heating element; (13) is the capacitive sensor of the tank level; (7) is the dispensing assembly, and (8) is its actuator (which may be mechanical or electromechanical), allowing the water to proceed into the beverage ingredients. The element (15) represents the control unit of the machine for preparing hot drinks; (10) is the incremental rotary encoder; (14) is the means of communication; (9) is the display interface with the input buttons 1(1.)

Figure 2 illustrates the procedure when the personalized adjustment mode is selected.

Figure 3 shows a block diagram of the machine for preparing hot drinks that is the subject of the present invention, showing: the element (12) represents the tap water supply valve; (1) represents the open water tank; (2) is the DC rotary vane pump; (3) is the pressure transducer; (4) is the check valve; (5) is the flow rate transducer; (6) is the boiler with heating element; (13) is the capacitive sensor of the tank level; (7) is the dispensing assembly, and (8) is its actuator (which may be mechanical or electromechanical), allowing the water to proceed into the beverage ingredients. The element (15) represents the control unit of the machine for preparing hot drinks; (10) is the incremental rotary encoder; (14) is the means of communication; 9 is the display interface with the input buttons (11).

### DESCRIPTION OF A PREFERRED EMBODIMENT:

A preferred embodiment shall be given as an example, but the invention is not limited to this:
The machine according to this procedure can be seen in Figure 3; it comprises a tank (1) for containing the water, being open and therefore at atmospheric pressure, which as described previously allows it to maintain a constant and known input pressure; its filling from the mains is conducted by way of the supply valve (12), and it may also be filled hand, since it is open; it comprises means for ensuring an adequate water level for its functioning, said means composed of a capacitive water level sensor (13). It comprises a single DC rotary pump (2) whose speed is regulated by means of a pulse width modulation circuit; downstream from this there is installed a check valve (4), a boiler with a heating element (6) and a temperature sensor, from which the water for the beverage is routed to the dispensing assembly (7), where the extraction of the beverage is produced; in this preferred embodiment, the assembly is operated by means of an electromechanical actuator (8), the opening of which carries the already prepared beverage to its container. In order to detect the parameters needed for the preparing of the beverages, the machine comprises the following transducers: at least one transducer for flow rate and one transducer for pressure, situated upstream from the boiler and heating unit, therefore working at the water inlet temperature, which extends the service life of these components. In order to interpret the signals of the transducers, as well as to adjust the parameters of the machine as a function of the beverage being prepared, the machine comprises at least one control unit (15) with a control logic, at least one memory for storing the data, and a clock to establish a time base for the events and means of communication (14), preferably wireless, such as WiFi or Bluetooth. In order for the user to opt for the recipe or the personalized adjustment mode, as described in the preceding, the machine comprises an incremental rotary encoder with push-button function (10) and a graphics display interface (9) having a keypad (11). It comprises means of alerting the user to situations involving the safety and proper working of the equipment by means of a visual and/or acoustic alarm when: the tank has a water level below the minimum established for an indicated period of time, or when a manual filling is needed, due to lack of filling from the mains; a visual alarm and blocking to prevent a possible overflow, restricting the maximum volume that can be dispensed in a single beverage. These means are embodied in at least one control unit that collects the signals of the transducers and the control algorithm that is performed therein, being displayed as mentioned through the graphics display interface of the machine.

With reference to Figure 2, the procedure begins by selecting a mode for producing beverages. choosing between a mode known as the recipe mode and a second mode of personalized adjustment; this initial selection is made by acting on a rotary encoder with push-button function, which will be used to validate the desired option, which in this case shall be called the personalized adjustment mode; the selected mode is shown on the graphics interface; again, by means of the rotary encoder, it is possible to pre-select the initial parameters for the pre-infusion phase of the beverage, in particular giving them values as a function of the preferences of the user of the machine; after these are validated by means of the push-button of the encoder, the machine will not start the preparation of the beverage until the actuator of the dispensing assembly is operated by the user. Once this is done, the user is able to change the parameters of extraction pressure and/or flow rate during the beverage preparation process by means of the rotation function of the encoder, and these parameters will be displayed on the graphics interface.

Thanks to its control unit and the sensors of the machine as described, the pump is controlled and/or adjusted by a pulse width modulation to ensure that the values that are read conform to those previously entered by the user. The procedure envisions a stopping of the pump when the dispensing assembly is acted upon or when the maximum time of preparation is exceeded, the latter circumstance protecting the machine from possible accidents and/or damage due to overflowing. Finally, the graphics interface will indicate the end of the recipe, providing the option of storing in the memory of the machine the parameters used in the preparation of the beverage, by means of the rotary encoder, and by subsequent validation by means of the push-button, it being possible to select their storage slot in the event of opting for this option, in order to reproduce these adjustments in later beverages by means of the recipe mode, and the cycle will be finished.

## Claims

1. A machine for preparing hot drinks, comprising a tank (1) for water at atmospheric pressure, a boiler (6) with a heating element, an electric valve configured to be connected to supply mains, a single DC motorized rotary pump (2), a flow meter (5), a pressure transducer (3), a check valve (4), a dispensing assembly (7) with an actuator (8), and a control unit (15), means for measuring and adjusting pressure, time, and temperature parameters in the beverage preparation, **characterized in that** the single DC motorized rotary pump (2) is regulated by means of a pulse width modulation circuit wherein the water supply at atmospheric pressure is provided from the tank (1), the upper portion of which is open, and which has means for monitoring the water level by a capacitive water level sensor (13) and by the supplemental operation of the electric valve connected to the supply mains; and **in that** the at least one flow meter (5) is situated between the tank and the boiler with heating element (6), the pressure transducer (3) downstream from the pump is configured to measure pressure during beverage preparation, the control unit (15) has means for entering the type of beverage being prepared, and for allowing a variation of the parameters for preparing the beverage and recording these for future use in at least one memory, these means of selection being embodied by a rotary encoder with push-button function (10) and a graphics display interface (9) having a conventional keypad (11); the machine comprises means of communication (14) such as a USB port and/or wireless means such as WIFI or Bluetooth; wherein the control unit (15) is configured to allow two modes of use, a first mode of personalized adjustment that enables a regulating, at the will of the user, of the parameters of infusion and/or extraction of the raw materials of plant origin during the process of making hot drinks, and a second recipe mode allowing the machine to reproduce beverage preparation using parameters previously stored during the personalized adjustment mode, by retrieving them from memory,; means of visual and/or acoustic alarm used to indicate when the dispensing time is exceeded or, in the recipe mode, when the dispensing flow rate is outside a pre-established range between a minimum and a maximum.

## Patentansprüche

1. Maschine zur Herstellung von Heißgetränken, umfassend einen Tank (1) für Wasser unter atmosphärischem Druck, einen Boiler (6) mit einem Heizelement, ein elektrisches Ventil, das dazu konfiguriert ist, an das Versorgungsnetz angeschlossen zu werden, eine einzelne Gleichstrommotor-Rotationspumpe (2), einen Durchflussmesser (5), einen Druckwandler (3), ein Rückschlagventil (4), eine Ausgabeanordnung (7) mit einem Stellglied (8) und eine Steuereinheit (15), Mittel zum Messen und Einstellen von Druck-, Zeit- und Temperaturparametern bei der Getränkeherstellung, **dadurch gekennzeichnet, dass** die einzelne Gleichstrommotor-Rotationspumpe (2) mittels einer Pulsweitenmodulationsschaltung geregelt wird, wobei die Wasserzufuhr bei atmosphärischem Druck aus dem Tank (1) bereitgestellt wird, dessen oberer Teil offen ist und der Mittel zum Überwachen des Wasserstands durch einen kapazitiven Wasserstandssensor (13) und durch die zusätzliche Betätigung des an das Versorgungsnetz angeschlossenen elektrischen Ventils aufweist; und dadurch, dass der mindestens eine Durchflussmesser (5) zwischen dem Tank und dem Boiler mit Heizelement (6) angeordnet ist, der Druckwandler (3) stromabwärts der Pumpe dazu konfiguriert ist, den Druck während der Getränkeherstellung zu messen, die Steuereinheit (15) Mittel aufweist, um die Art des Getränks, das hergestellt wird, einzugeben und um eine Variation der Parameter für die Herstellung des Getränks zu ermöglichen und diese für eine zukünftige Verwendung in mindestens einem Speicher zu speichern, wobei diese Auswahlmittel durch einen Drehgeber mit Drucktastenfunktion (10) und eine Grafikanzeige-Schnittstelle (9) mit einer herkömmlichen Tastatur (11) verkörpert werden; wobei die Maschine Kommunikationsmittel (14) wie einen USB-Anschluss und/oder drahtlose Mittel wie WIFI oder Bluetooth umfasst; wobei die Steuereinheit (15) dazu konfiguriert ist, zwei Benutzungsmodi zu ermöglichen, einen ersten Modus der personalisierten Einstellung, der es ermöglicht, die Parameter der Infusion und/oder der Extraktion der Rohstoffe pflanzlichen Ursprungs während des Prozesses der Zubereitung von Heißgetränken nach Belieben des Benutzers zu regeln, und einen zweiten Rezeptmodus, der es der Maschine ermöglicht, die Getränkeherstellung unter Verwendung von zuvor während des personalisierten Einstellungsmodus gespeicherten Parametern zu reproduzieren, indem sie diese aus dem Speicher abruft; wobei Mittel für einen visuellen und/oder akustischen Alarm verwendet werden, um anzuzeigen, wenn die Ausgabezeit überschritten wird oder im Rezeptmodus, wenn die Durchflussrate der Ausgabe außerhalb eines vorher festgelegten Bereichs zwischen einem Minimum und einem Maximum liegt.

## Revendications

1. Machine pour la préparation de boissons chaudes, composée d'un réservoir (1) pour de l'eau à pression atmosphérique, une chaudière (6) avec un élément chauffant, une électrovanne configurée pour être reliée au secteur d'alimentation, une seule pompe rotative motorisée en CC (2), un débitmètre (5), un transducteur de pression (3), un clapet anti-retour (4), un ensemble de distribution (7) avec un actionneur (8), et une unité de contrôle (15), des moyens pour mesurer et régler des paramètres de pression, de temps et de température dans la préparation de boissons, **caractérisée en ce que** la seule pompe rotative motorisée en CC (2) est réglée par le biais d'un circuit de modulation de largeur d'impulsion dans laquelle l'alimentation en eau à pression atmosphérique est fournie à partir du réservoir (1), dont la portion supérieure est ouverte, et qui présente des moyens pour la surveillance du niveau d'eau par un capteur capacitif du niveau d'eau (13) et par le fonctionnement supplémentaire de l'électrovanne reliée au secteur d'alimentation ; et **en ce que** l'au moins un débitmètre (5) est situé entre le réservoir et la chaudière avec élément chauffant (6), le transducteur de pression (3) en aval de la pompe est configuré pour mesurer la pression pendant la préparation des boissons, l'unité de contrôle (15) présente des moyens pour introduire le type de boisson étant préparée, et pour permettre une variation des paramètres pour la préparation de la boisson et l'enregistrement de ceux-ci pour son utilisation future dans au moins une mémoire, ces moyens de sélection étant implémentés par un encodeur rotatif avec une fonction de bouton poussoir (10) et une interface d'affichage graphique (9) ayant un clavier numérique conventionnel (11) ; la machine comprend des moyens de communication (14) tels qu'un port USB et/ou des moyens sans fil tels que WIFI ou Bluetooth ; dans laquelle l'unité de contrôle (15) est configurée pour permettre deux modes d'utilisation, un premier mode de réglage personnalisé qui permet un réglage, à la volonté de l'utilisateur, des paramètres d'infusion et/ou d'extraction des matières premières d'origine végétale pendant le procédé d'élaboration de boissons chaudes, et un deuxième mode de recette permettant à la machine de reproduire la préparation de boissons en utilisant des paramètres précédemment stockés pendant le mode de réglage personnalisé, par la récupération de ceux-ci à partir de la mémoire ; des moyens d'alarme visuelle et/ou acoustique utilisés pour indiquer lorsque le temps de distribution est dépassé ou, dans le mode de recette, lorsque le débit de distribution est en dehors d'une plage préétablie entre un minimum et un maximum.
